# EUROPEAN PATENT APPLICATION

(11) **EP 0 608 143 A1**
(43) Date of publication of application: **27.07.1994**
(21) Application number: 94300459.8
(22) Date of filing: 21.01.1994
(51) Int. Cl.: C08J 9/12, C08G 63/66, C08G 69/40, C08G 73/16, A43B 13/38

(54) **A thermoplastic foam having improved cushioning and long term durability**

(30) Priority: 22.01.1993 US 7683
(71) Applicant: GENERAL ELECTRIC COMPANY, Schenectady, NY 12345 (US)
(72) Inventor: Dunton, Thomas Paul, Lebanon Springs, New York 12114 (US); Roberts, Daniel Lee, Albany, New York 12005 (US)
(74) Representative: Pratt, Richard Wilson

(57) **Abstract**

A process for preparing a foamed thermoplastic polymer composition having substantial spherical uniform closed cells and improved properties of dynamic impact cushioning and long term durability and wherein the foaming agent employed is a gaseous foaming agent of either nitrogen or air or a combination thereof. This invention is also directed to a product prepared by the process of this invention and to a foamed article and a foamed footwear article having a substantially uniform cell size having an average diameter of at least about 0.10 mm and a density of 0.1 to about 0.8 grams per centimeter, said foamed article also having improved dynamic impact cushioning and long term durability properties.

## Description

### Field of the Invention

The present invention is directed to a process for preparing a particular foamed thermoplastic composition having improved impact cushioning properties and long term durability by using a particular gaseous foaming agent to prepare the foam. The gaseous foaming agent is either nitrogen, air or a combination of both.

### Description of the Prior Art

Foam plastics are well known in the art. There are many methods of preparing foam thermoplastic articles by using chemical foaming agents, liquid foaming agents and gaseous foaming agents. U.S. Patent 4,984,376 discloses a flexible midsole for footwear made of a foamed thermoplastic copolymer elastomer. The foam may be prepared by using a liquid, solid or an inert gas as the foaming agent. The patent further discloses that the inert gases that can be used are nitrogen or carbon dioxide. However, the examples in U.S. Patent 4,984,376 disclose various hydrocarbon foaming agents and fully or partially halogenated hydrocarbon foaming agents. There are no examples to using an inert gas such as nitrogen or carbon dioxide.

U.S. Patent 4,128,950 discloses an athletic shoe of reduced weight employing low density closed cell synthetic plastic foam for an intermediate sole layer. The foam is an ethylene vinyl acetate polymer which is crosslinked or thermo-setting.

U.S. Patent 4,323,528 discloses a method for producing low density foamed thermoplastic materials, preferably polystyrene, polyethylene, polyvinylchloride and other thermoplastic polymers. However, the foaming agents disclosed are the liquid fluorocarbons and the reference does not disclose the use of other foaming agents such as gaseous foaming agents. The patent also discloses that the foaming agents preferred are those that provide a plasticizing effect on the thermoplastic polymer.

U.S. Patent 4,988,740 discloses a low density closed cell foamed thermoplastic copolymer elastomer. This patent further discloses that a liquid, solid or an inert gas can be used as foaming agents and, further, specifically discloses as inert gases nitrogen or carbon dioxide. However, in this patent, there are no examples to the use of an inert gas as a foaming agent. All foaming agents used therein in the examples are hydrocarbon foaming agents or fully or partially halogenated hydrocarbon foaming agents. There are no examples of the use of an inert gas as a foaming agent.

U.S. Patent 4,588,754 discloses foamable thermoplastic compositions of copolyetherester compositions, using as the foaming agent citric acid, sodium bicarbonate or mixtures thereof.

U.S. Patent4,280,005 discloses a foamed thermoplastic injection moldable composition wherein the foaming agent can be either liquid or gaseous foaming agents. However, again in this reference, the examples are limited to disclosing only the use of chemical foaming agents such as phenyl-tetrazole. It appears that all of the examples in this reference use the tetrazole as the foaming agent. There are no examples to using a gaseous foaming agent.

### Summary of the Invention

The present invention is directed to preparing particular thermoplastic foams having improved dynamic impact cushioning properties and long term durability. The foams of this invention are prepared by using specifically as the foaming agent a gaseous foaming agent, which gaseous foaming agents may be either nitrogen or air, or a combination of both. It has been surprisingly found that by using the particular foaming agent of the present invention, a foam of substantially uniform closed cell structure is obtained wherein, the cells have an average diameter of at least about 0.1 mm. It is through the use of the particular foaming agent of this invention that foams of the particular thermoplastics disclosed herein are obtained having excellent dynamic impact cushioning properties and long term durability over the prior art, which is unexpected. Even though the prior art does disclose the use of inert gases, the examples of the prior art only disclose the use of chemical hydrocarbon foaming agents, including the fully and partially halogenated hydrocarbons, for foaming thermoplastic polymers of the types disclosed in this invention.

It has further been determined that by the use of the gaseous foaming agents of the instant invention, little or no degradation or buckling or distortion of the foam cell structure occurs during use thereof when used as a sole or a component part of a sole such as a midsole in footwear, thereby resulting in long term durability of the foam structure. On the other hand, the use of a chemical or liquid foaming agent that is of a hydrocarbon base orfully or partially halogenated hydrocarbon base, results in degradation or buckling of the cell structure during impacting thereof. Consequently, this limits the long term durability of the sole or component part thereof. It is known that residual hydrocarbon remains in the foamed cell wall. While not fully understood, it is believed that the residual hydrocarbon, after foaming, is absorbed by the thermoplastic polymer forming the cell wall wherein the thermoplastic polymer is plasticized by the residual hydrocarbon. The plasticizing of the thermoplastic polymer or thermoplastic resin results in lowering the properties of the thermoplastic resin such as flexural and tensile modulus, heat resistance, dynamic impact cushioning and long term durability.

It has also been surprisingly discovered that by using the gaseous materials of this invention as foaming agents, a low density foam is obtained having a density of about 0.10 to about 0.8 grams per cubic centimeter (g/cc) and preferably about 0.1 to about 0.6 grams per cubic centimeter and most desirable about 0.1 to about 0.3 grams per cubic centimeter. The lower density foams are better suited for the midsole or innersole component of a footwear article while the higher denisty foams may be suitable for the outersole. The foaming agents of this invention produce substantially spherical uniform closed cell structures having an average diameter of at least about 0.1 mm, whereas it has been found that the structure obtained using liquid low boiling hydrocarbon or fully or partially halogenated hydrocarbon foaming agents result in non uniform cells varying from small to large cells of about 0.1 to about 1.0 mm in diameter. Under impact conditions, these smaller cells formed with a hydrocarbon base foaming agent, buckle and distort.

Numerous applications for the foamed compositions of this invention exist in such applications as footwear, automobile parts and other applications where dynamic impact cushioning and long term durability is wanted.

Therefore, it is an object of this invention to provide a process for preparing low density thermoplastic polymer foams having improved dynamic impact cushioning properties and long term durability.

It is another object of this invention to provide an article prepared by the process of this invention wherein the article has a foamed uniform closed cell size of at least about 0.1 mm average in diameter and a foam density of about 0.10 to about 0.8 grams per cubic centimeter.

A further object of this invention is to provide a flexible sole or component thereof for footwear, wherein the flexible sole has improved dynamic impact cushioning properties and long term durability.

Yet another object of this invention is to provide a process for preparing low density thermoplastic polymer foams wherein a blend of at least 10 percent by weight of regrind of the foamed thermoplastic polymers of this invention can be used in the process of producing the foamed polymers disclosed herein.

### Detailed Description of the Invention

In accordance with the present invention, there is provided a process for preparing a low density closed cell foamed thermoplastic polymer. The thermoplastic polymers that can be employed in the present invention are copolyetherimide esters, copolyester esters, copolyetheramide esters, and copolyetheresters.

The copolyetherimide esters that may be employed in this invention consist of a multiplicity of reccurring long chain ester units and short chain ester units that can be joined through imido-ester linkages. The hard segments of these elastomers consist essentially of multiple short chain ester units represented by the formula: 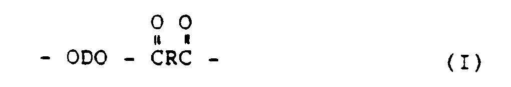 wherein R is a divalent radical remaining after removal of carboxyl groups from an aromatic dicarboxylic acid having a molecular weight less than about 300, and D is a divalent radical remaining after removal of hydroxyl groups from a diol having a molecular weight less than about 250; provided said short chain ester units amount to about 20-85 percent by weight of said copolyetherimide ester.

The soft segments of these polymers are derived from poly(oxyalkylene diimide) diacid which can be characterized by the following formula: 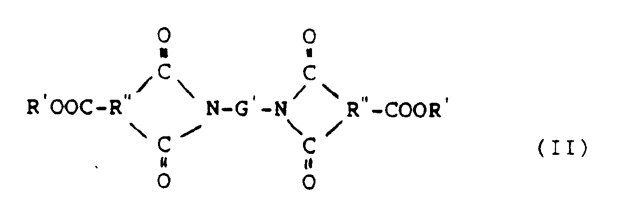 Wherein, each R" is independently a trivalent organic radical, preferably a C₂ to C₂₀ aliphatic, aromatic or cycloaliphatic trivalent organic radical; each R' is independently hydrogen or a monovalent organic radical preferably selected from the group consisting of C₁ to C₆ aliphatic and cycloaliphatic radicals and C₆ to C₁₂ aromatic radicals, e.g., benzyl, much preferably hydrogen; and G' is the radical retraining after the removal of the terminal (or as nearly terminal as possible) amino groups of a long chain ether diamini having an average molecular weight of from about 600 to about 12,000, preferable from about 900 to about 4,000, and a carbon-to- oxygen ratio of from 1.8 to about 4.3.

These long chain ether gylcols from which the polyoxyalkylene diamine is prepared include poly (ethylene ether) gylcol; poly(propylene ether) gylcol; poly(tetramethylene ether) gylcol; random or block copolymers of ethylene oxide and propylene oxide, including propylene oxide terminated poly(ethylene ether) gylcol; and random or block copolymers of tetrahydrofuran with minor amounts of a second monomer such as methyl tetrahydrofuran. Especially preferred poly(alkylene ether) gylcols are poly(propylene ether) gylcol and poly(ethylene ether) gylcol end capped with poly(propylene ether) gylcol and/or propylene oxide.

The tricarboxylic component is a carboxylic acid anhydride containing an additional carboxylic group or the corresponding acid thereof containing two immide forming vicinal carboxyl groups in lieu of the anhydride group. Mixtures thereof are also suitable. The additional carboxylic group must be esterified and preferably and substantially nonimidizable.

Further, while trimellitic anhydride is preferred as the tricarboxylic component, any of a number of suitable tricarboxylic acid constituents will occur to those skilled in the art.

Generally, the thermoplastic elastomers comprise the reaction product of dimethyltherephthalate, preferably with up to about 40 mole percent of another dicarboxylic acid: 1, 4-butanediol, generally with up to about 40 mole percent of another saturated or unsaturated aliphatic and/or cycloaliphatic diol, and a polyoxyalkylene diamid diacid prepared from a polyoxyalkalene diamine of molecular weight, about 600 to about 12,000, preferable from about 900 to about 4,000, and trumellitic anhydride.

The polyethermide esters described herein and the procedures for their preparation are more fully described in U.S. Pat. Nos. 3,123,192, 3,763,109; 3,651,014; 3,663,655; and 3,801,547 incorporated herein by reference.

The preparation of the copolyetherimide ester is more fully described in U.S. Patent 4,556,705, also incorporated herein by reference.

Another thermoplastic resin that may be employed in the practice of this invention are the copolyether esters which also consist of a multiplicity of reccurring long chain ester units and short chain ester units, joined head-to-tail through ester linkages. The long chain ester units are represented by the formula: 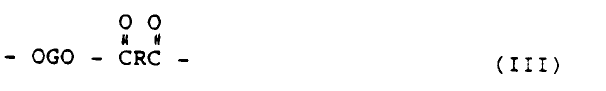 and the said short chain ester units are represented by the formula: 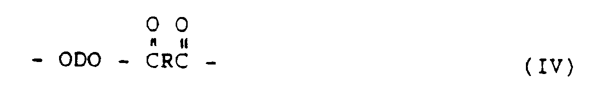 wherein G is a divalent radical remaining after the removal of terminal hydroxyl groups from a poly (alkylene- oxide) gylcol having a number average molecular weight of about 400 to about 6,000 and a carbon to oxygen atomic ratio of about 2.0-4.3; R is a divalent radical remaining after removal of carboxyl groups from an aromatic dicarboxylic acid having a molecular weight of less than about 300 and D is a divalent radical remaining after removal of hydroxyl groups from a diol having a molecularweight less than about 250; provided said short chain ester units amount to about 25-70 percent by weight of said copolyetherester.

A more detailed description of suitable copolyether esters and procedures for their preparation are further described in U.S. Patent Nos. 3,023,192; 3,651,014; 3,763,109; 3,766,146; and 4,355,155, which are incorporated herein by reference.

Another thermoplastic resin that may be employed in the practice of this invention are the copolyester esters which consist essentially of high melting segements comprised of repeating short chain ester units of the formula: 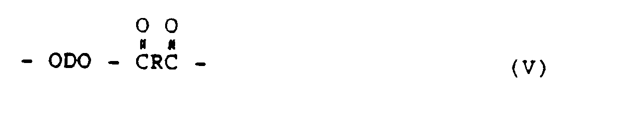 wherein D and R are as previously described herein. The soft segaments in the copolyester ester elastomers are derived from low melting polyester gylcols such as poly(butylene adipate) or poly(caprolactone). The procedure for preparing the copolyester esters of this invention are described in more detail in U.S. Patent 4,031,165, incorporared herein by reference. In addition, other useful procedures involve coupling of preformed blocks of high and low melting point polyester gylcols. Coupling can be accomplished by reaction of a mixture of a block with a diisocyanate as described in European Patent No. 00013461 to Huntjens et al. Coupling can also be accomplished by heating the mixed blocks in the presence of terephthaloyl or isophthaloyl discapro- lactam addition compounds. This coupling method is further described in Japanese Patent Publication No. 73/4115. Another procedure of use when the low melting blocks are to be provided by polycapalactone involves reacting a preformed high melting point block terminated with hydroxyl groups with epsilon capalactone in the presence of a catalyst such as dibutyl tin dilaurate. The tri-block polymer is hydroxyl terminated and may be joined to give a finished product by reaction with a diepoxide such as diethylene gylcol diglycidyl ether. Japanese Patent Publication No. 83/162654 gives further detailed description of this reaction.

Also usable in the present invention are the copolyetheramide polymers, and they differ from the other polymers in that their reccurring hard segments are based on repeating amide units, rather than short chain ester units. The repeating amide units may be represented by the formula: 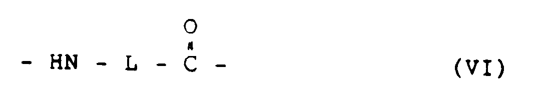 or by the formula 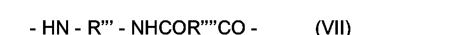 Wherein L is a divalent hydrocarbon radical containing 4-14 carbon atoms, R'" is a divalent hydrocarbon radical of 6-9 carbon atoms and R"" is a divalent hydrocarbon radical of 6-12 carbon atoms. These polymers in their preparation are described in greater detail in U.S. Patent 4,331,786 incorporated herein by reference.

In its broadest sense, the process of this invention comprises melting the thermoplastic polymer composition under temperature and pressure, injecting a gaseous foaming agent into the molten thermoplastic polymer composition, maintaining the molten thermoplastic polymer under sufficient pressure to prevent foaming of the molten thermoplastic polymers composition, cooling the molten thermoplastic composition to a suitable foaming temperature prior to foaming and foaming the molten thermoplastic polymer composition. The gaseous foaming agent is selected from the group consisting of nitrogen, air and combinations thereof.

Preferably, the process of this invention for preparing the foamed compositions may be either a straight extrusion of the foamable thermoplastic polymer composition into the atmosphere or the process may be injection molding of the foamable thermoplastic polymer composition of this invention. In the extrusion process of the foamable thermoplastic polymer composition, the thermoplastic polymer is fed into the feed hopper of an extruder, melted under temperature and pressure, the gaseous foaming agent of this invention is injected into the molten polymer, pressure is maintained within the extruder sufficient to prevent foaming of the molten polymer whi le being advanced through the extruder, the molten polymer composition is then cooled to a temperature for foaming the molten polymer prior to foaming, and then extruding the composition into a zone of lower pressure, where the gaseous foaming agent foams or expands the thermoplastic polymer. The temperature for foaming is generally lower than the temperature for melting the thermoplastic polymer and is generally about 190°C to about 204°C, depending, however, on the thermoplastic polymer being foamed. In the practice of this invention, the foamable composition may be extruded into the atmosphere (atmospheric pressure) or into a controlled pressurized atmosphere where the pressure may be in excess of atmospheric pressure or less than atmospheric pressure.

The foamed polymer compositions so produced in accordance with this invention may be foamed into large slabs of densities of at least about 0.1 to about 0.8 grams per cubic centimeter. The cells of the foamed compositions of this invention are substantially spherical uniform closed cells of at least about 0.1 mm average diameter and preferably 0.1 to about 0.3 mm average in diameter. The foamed slabs so produced may be prepared by adding the thermoplastic polymer composition, usually in the form of pellets, to the feed hopper of an extruder. The polymer composition is melted and mixed in the extruder to produce a molten mass of the polymer which is advanced through the extruder. The temperature employed is that necessary to melt the polymer and may vary depending on the particular polymer employed in this invention but may generally vary from about 130°C to about 230°C. The gaseous foaming agent is injected into the molten mass, mixed and advanced through the extruder under pressure sufficient to prevent foaming of the molten polymer. The molten thermoplastic polymer is then cooled to a suitable foaming temperature as described previously and then extruded through a die orifice into a zone of lower pressure to allow foaming of the foamable composition. As stated previously, this zone of lower pressure may be atmospheric or higher or lower than atmospheric pressure. Also, the extrusion of foamed thermoplastic composition may be continuous depending on the size of the slab wanted.

In the injection molding process, the polymer is fed into an injection molding machine, melted under temperature and pressure, the gaseous foaming agent of this invention is then injected into the molten polymer, which is under a pressure sufficient to prevent foaming of the polymer prior to injecting the foamable polymer into a mold and then injecting the foamable composition into a mold, where it is allowed to foam or expand, filling the mold cavity. Generally, vents are provided in the mold to allow the expanding gases to escape.

In addition, the compositions of this invention employ nucleating agents to help control the cell size of the foamed structure. Nucleating agents are used in such small quantities as not to over nucleate the polymer during foaming thereof. In the practice of this invention, the nucleating agents that may be employed herein are any of the well known nucleating agents employed with foamable thermoplastic compositions. Particularly useful nucleating agents employed herein are the encapsulated mixtures of sodium bicarbonate and citric acid, talc in fine powder form or a combination of these or other nucleating agents. The nucleating agent may be coated with zinc stearate to provide uniform dispersion of the nucleating agent in the foamable composition. The amount of nucleating agent to be employed should be less than about 0.1 weight percent, based on the weight of the foamable thermoplastic polymer composition, and preferably 0.01 to about 0.06 percent by weight and more particularly 0.01 to about 0.03 percent by weight. If excessive or over nucleation should occur, very fine cell sizes are obtained with thin walls, which cells easily collapse or buckle under impact use, such as, for example, in footwear soles.

The thermoplastic polymers of this invention should have a Melt Viscosity Index (MVI) of less than about 5 grams per 10 minutes at 250°C as determined by ASTM D1238 (2.16 kg. weight). Preferably, the MVI is less than about 3 and particularly in the range of about 1 to 3. The lower the MVI, the higher the viscosity of the molten resin, and thus a higher hot melt strength. With a polymer of higher hot melt strength, the better is the capability of the polymer to hold the gaseous foaming agent during foaming. If the MVI is too high, cell bursting may occur, since the hot melt strength of the molten polymer is low and sufficient cell wall strength is not obtained.

As stated previously, the important and surprising feature of the present invention is the use of nitrogen or air, or a combination of both as the foaming agent, which results in the surprising discovery that the foam polymers of this invention have improved dynamic impact cushioning and long term durability. Not even carbon dioxide is suitable as a gaseous foaming agent, since sufficiently low densities cannot be achieved. Even with higher amounts of carbon dioxide added to the molten polymer in order to obtain lower denisty foams, low density foams could not be obtained. The cells after forming collapsed probably because the cell walls could not support the differential pressure created by the permeation of the carbon dioxide from the cell through the cell wall.

While the prior art discloses that. inert gases, such as nitrogen and carbon dioxide, can be employed in the preparation of certain thermoplastic elastomerfoams, there are, however, no specific examples of the use of inert gaseous foaming agents with the certain particular thermoplastic polymers of this invention, nor the unusual or surprising results achieved and unexpected with the gaseous foaming agents of this invention. The prior art had no appreciation of the unique and unexpected results obtained with the foaming agents of this invention. By so using these particular gaseous foaming agents, namely nitrogen, air or a mixture thereof, the cell size, cell structure and particular properties of the foamed thermoplastic polymer composition have been obtained as disclosed in the Examples and elsewhere herein.

Typical materials that are currently used today in providing innersoles, midsoles or outersoles for athletic footwear are ethylene vinyl acetate (EVA) and polyurethane foams. These foams are thermosetting and require, in the case of EVA, the use of a cross linking agents to provide thermosetting properties such as dicumyl peroxide. Polyurethanes cross link upon copolymerization of the monomers employed and, therefore, probably do not need or require external cross linking agents. However, these foams, while having initial good impact and cushioning properties do not have the combination of improved dynamic impact cushioning, light weight and long term durability at low densities, particularly when employed in footwear applications. Collapsing, buckling or distortion of the foamed cells occurs under impact use, thereby reducing the life of the footwear article.

While polyurethane foams have good impact cushioning properties, along with long term durability, they are, however, generally of a denser foam in order to achieve these properties. Unfortunately, the footwear employing the denser polyurethane foams are heavier. On the other hand, using polyurethane of lower density in order to achieve lighterfootwear, it has been found that the foamed polyurethane cellular structure degrades in performance over impact use and the structure loses its resiliency from its initial cushioning property. In addition, polyurethane foams have to be prepared under particular process conditions and, therefore, are costly to prepare. Also, the polyurethane foam cells become open cells after impact use. A small membrane forms in a portion of the cell wall when so formed. Upon initial impact, these membranes rupture, thereby causing the cell to become an open cell tructure, resulting in the ability of the cell to absorb moisture and therefore further increasing the weight to the running shoe. This is undesirable, since weight is an important factor to a runner. The industry constantly strives for lower density foams for footwear to reduce weight but also to maintain good dynamic impact cushioning with long term durability which has now been achieved with the present invention.

Afurther feature of the present invention is that the foams prepared in accordance with the teachings hereof can be recycled. When footwear outersoles, midsoles or innersoles are prepared, they are generally stamped out of a foamed structure or slab. The remainder or "scrap" from such slabs can be recycled by grinding, pelletizing if necessary, and then fed into an extruder, melted, mixed with the gaseous foaming agent of this invention, and extruded into a foamed slab. In normal production, such "scrap" can range from about 30% to about 70% by weight of the foamed slab. Therefore, recycling of the foamed material of the present invention reduces waste by utilizing the scrap and results in economic and environmental advantages to the footwear manufacturer. The recycle content of the foamed polymers of this invention can be as little as about 10% by weight, but is preferably about 25% by weight with the balance being virgin polymer. In fact, even 100% recycle of foamed scrap polymers of this invention can be used without virgin polynier make up.

With respect to other foams used in the foamed shoe industry, recycling becomes a problem. First of all, recycling of thermoset plastics is extemely difficult, if not impossible by the vary nature of thermoset plastics. This would be so in the case of EVA thermosets and polyurethane thermosets.

In the case of other thermoplastics employed in the foamed footwear industry, such as copolyether ester or even copolyetherimide esters where a hydrocarbon or fully or partially halogenated hydrocarbon foaming agent is used, such as isobutane, there is residual isobutane in the foamed "scrap" from the slab or structure out of which the soles or component parts are stamped. In recycling, this residual isobutane needs to be removed before recycling thereof and would therefore require devolatization of the foamed "waste" or "scrap". This can be costly, may be uneconomical and may even present an environmental hazard.

Therefore, the foams prepared by the process of this invention have environmentally desireable properties, as well as other properties as set forth herein.

### Description of the Preferred Embodiment

The following examples are set forth to illustrate the present invention and are not to be construed as limiting the scope of the invention thereto. Unless otherwise indicated, all parts and percentages are on a weight basis.

Also, in the practice of this invention, the thermoplastic polymer compositions may further contain such additives as heat and light stabilizers, process stabilizers, pigments, lubricants, surfactants, and melt viscosity promoters. The amount of such additives that may be employed herein is well known by those skilled in the art.

### Example 1

A foamed copolyetherimide ester (LOMOD@ NBE 112 resin of General Electric Company) having 3 Melt Viscosity Index (MVI) of 1.5 grams/10 min. at 250°C by ASTM D1238 (2.16 kg. weight) was prepared by continuously extruding on a tandem foam extrusion line utilizing a flat die having an opening of 8.0 inches by 0.10 inches. The copolyethermide ester was first dried in a de-humidifying drier, and mixed in the machine hopper with a nucleating agent. The nucleating agent used was an encapsulated sodium bicarbonate citric acid blend and was mixed with the resin at a level of 0.025% by weight of the resin matrix. The copolyetherimide ester resin was melted in the extruder which had the nucleating agent mixed therewith. The extruder had a barrel temperature of about 250°C. Dry nitrogen gaseous foaming agent was then injected under high pressure into the thermoplastic resin melt in the extruder at the rate of about 0.11 % by weight of the resin matrix and mixed with the molten resin. After through mixing of all components, the resultant mixture was then cooled to the prop- erfoaming temperature, about 193°C, and extruded continuously through the die orifice at about 193°C. The foam produced was about 3/4 inch thick by about 12 inches wide and had a specific density of about 0.29 grams per cubic centimeter.

The foamed sample of this Example 1 was cut into strips of about 4 inches long by about 2¹/₂ inches wide by about 3/4 of an inch thick and was impact tested using equipment and a procedure developed by General Electric Company Research and Development Center, Schenectady, New York, by Dr. Dean Matsumoto, a polymer physicist, in order to better simulate the actual impact on an athletic running shoe by runners of various weights. It is believed that the devised test procedure clearly aides in developing foamed soles (or midsoles or innersoles) for good dynamic impact cushioning and durability. The impact tester uses a servohydraulic tester by the MTS Corporation and it is MTS system 909.52 having a 22,000 pound load frame 312.21. The piston is driven by a 90 gallon per minute servovalve having a controlled maximum velocity of about 105 inches per second. The tester is controlled by an MTS 458.20 analog electronics. The electric wave form and data acquisition are accomplished with a Dell system 210 computer and a Hewlett Packard HP 6942A multi- programmer. The sample is placed in the servohydraulic tester between two horizontal, parallel metal plates, one of which is attached to the piston, and the other is attached to the load cell of the tester. The sample is then subjected to impact testing by programming the piston to impact a compresion pulse of 55 millisecond ¹/₂ sine wave every second for up to 250,000 cycles. A critical factor in this test procedure is that the peak force per unit of contact area of the sample must be constant throughout the test. Three samples were subjected to three different peak forces per unit of contact area, and they were 169 Ibs/in.², 200 Ibs/in.² and 250 Ibs/in.², which is representative of the load underthe heel of a runnerof about 150 lbs, 177 Ibs and 222 Ibs, respectively. At 250,000 cycles, this represents about 500 miles of running at an average or normal stride.

The results obtained with the foamed samples of this Example 1 showed that the foamed copolyetherimide ester polymer had an essentially even energy absorption per unit volume of foam throughout the test cycle of 250,000 cycle.

### Example 2

Foamed samples of a copolyetherimide ester (LOMOD@ 115 resin of General Electric Company) were also impact tested under the same procedure of Example 1 using three foamed samples under the same peak forces per unit of contact area, namely 169 Ibs/in.², 200 Ibs/in.² and 250 Ibs/in.². The foamed samples had been prepared using liquid isobutane as the foaming agent and had a density of about 0.28 grams per cubic centimeter.

The results showed that in each sample tested the energy absorption per unit volume of foam dropped throughout the test cycle up to 250,000 cycles, which shows that the samples lost impact cushioning and long term durability as compared to the foamed copolyetherimide ester prepared with nitrogen as the foaming agent.

### Example 3

After testing, foamed samples of Example 1 and 2 were examined for cell structure by taking scanning electronic photomicrographs. The photomicrographs showed that the foamed cells of Example 1 were structurally intact after testing with essentially no apparent signs of cell wall buckling or rupture.

The scanning photomicrographs of the samples of Example 2 showed that the foam prepared with isobutane foaming agent had cells showing wall buckling and wall rupture.

### Example 4

Example 1 was repeated except that gaseous carbon dioxide was used instead of gaseous nitrogen. The density of foam obtained was greater than 0.5 grams per cubic centimeter. In an attempt to obtain lower density foam, the rate of gaseous carbon dioxide injected into the molten thermoplastic polymer was increased. While initially lower density foam appeared to be obtained, the foamed cells collapsed almost immediately, resulting in unacceptable foams.

Obviously, other modifications and variations of the present invention are possible in light of the above teachings. It is understood, therefore, that changes may be made in the particular embodiments of the invention described which are within the intended scope of this invention as defined by the appended claims.

## Claims

1. A process for preparing a foamed thermoplastic polymer composition comprising melting under temperature and pressure a thermoplastic polymer composition having in admixture therewith a nucleating agent, injecting a gaseous foaming agent into the molten thermoplastic polymer composition, maintaining the molten thermoplastic polymer composition under a pressure sufficient to prevent foaming of the molten thermoplastic polymer composition, cooling the molten thermoplastic polymer composition to a suitable foaming temperature prior to foaming and foaming the molten thermoplastic polymer composition, wherein said foamed thermoplastic polymer composition has improved dynamic impact cushioning and long term durability properties and wherein said thermoplastic polymer composition is selected from the group consisting of copolyetherimide esters, copolyether esters, copolyester esters and copolyethera- mides, and mixtures thereof, said gaseous foaming agent is selected from the group consisting of nitrogen, air and combinations thereof.

2. A process for preparing a foamed thermoplastic polymer composition consisting essentially of melting under temperature and pressure a thermoplastic polymer composition having in admixture therewith a nucleating agent, injecting a gaseous foaming agent into the molten thermoplastic polymer composition, maintaining the molten thermoplastic polymer composition under a pressure sufficient to prevent foaming of the molten thermoplastic polymer composition, cooling the molten thermoplastic polymer composition to a suitable foaming temperature prior to foaming and foaming the molten thermoplastic polymer composition, wherein said foamed thermoplastic polymer composition has improved dynamic impact cushioning and long term durability properties and wherein said thermoplastic polymer composition is selected from the group consisting of copolyetherimide esters, copolyether esters, copolyester esters and co- polyetheramides, and mixtures thereof, said gaseous foaming agent is selected from the group consisting of nitrogen, air and combinations thereof.

3. The process of Claim 1 wherein the thermoplastic polymer composition has a Melt Viscosity Index of less than about 5 grams per 10 minutes at 250°C and a weight of 2.16 kg.

4. The process of Claim 1 wherein the foamed thermoplastic polymer composition has substantially spherical uniform closed cells of at least about 0.1 mm average diameter.

5. The process of Claim 4 wherein the average diameter of the cells is about 0.1 mm to about 0.3 mm.

6. The process of Claim 1 wherein the nucleating agent is selected from the group consisting of a sodium bicarbonate and citric acid blend, talc or mixtures thereof.

7. The process of Claim 1 wherein the gaseous foaming agent is nitrogen.

8. The process of Claim 1 wherein the gaseous foaming agent is air.

9. A foamed thermoplastic polymer composition prepared by the process of Claim 1.

10. A foamed thermoplastic copolyetherimide ester having improved dynamic impact cushioning and long term durability properties prepared by the process of Claim 1.

11. A foamed thermoplastic copolyetherimide ester prepared by the process of Claim 5.

12. A foamed thermoplastic copolyether ester prepared by the process of Claim 5.

13. The process of Claim 1 wherein the melted thermoplastic polymer composition comprises a blend at least 10% by weight of recycled thermoplastic polymer composition.

14. A foamed thermoplastic polymer composition having substantially spherical uniform closed cells of at least about 0.1 mm average diameter and a density of about 0.1 to about 0.8 grams per cubic centimeter, wherein said foamed thermoplastic polymer composition has improved dynamic impact cushioning and long term durability properties.

15. Afoamed flexible sole component of a footwear article, wherein said foamed flexible sole component consists essentially of a foamed thermoplastic copolyetherimide ester having substantially spherical uniform closed cells of at least about 0.10 mm average diameter, and a density of about 0.10 to about 0.8 grams per cubic centimeter, wherein said foamed flexible sole component has improved dynamic impact cushioning and improved long term durability properties.

16. The foamed flexible sole component of Claim 15 wherein the cell size is about 0.1 mm to about 0.3 mm, and the density of the foam is about 0.1 to about 0.3 grams per cubic centimeter.

17. The foamed flexible sole component of claim 15 wherein the component is a foamed flexible midsole.
